(19) Europäisches Patentamt
European Patent Office
Office européen des brevets

(11) **EP 4 742 166 A1**

(12) **EUROPEAN PATENT APPLICATION**

(43) Date of publication:
**13.05.2026 Bulletin 2026/20**

(21) Application number: **24211499.9**

(22) Date of filing: **07.11.2024**

(51) International Patent Classification (IPC):
***G06T 15/06*** (2011.01)

(52) Cooperative Patent Classification (CPC):
**G06T 15/06; G06T 2200/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sony Interactive Entertainment Europe
Limited
London W1F 7LP (GB)**

(72) Inventors:
- **TREDER, Matthias
London, W1F 7LP (GB)**
- **LUTZ, Sebastian
London, W1F 7LP (GB)**

(74) Representative: **Gill Jennings & Every LLP
The Broadgate Tower
20 Primrose Street
London EC2A 2ES (GB)**

(54) **METHODS FOR RENDERING AN IMAGE OF A THREE-DIMENSIONAL SCENE**

(57) A method for rendering an image of a three-dimensional scene using path tracing. Scene feature data for a pixel of the image to be rendered using path tracing is obtained, indicating visual features of a location of the three-dimensional scene for depiction by the pixel in the image, is obtained. The scene feature data is processed at an artificial neural network, ANN, to determine a budget allocation parameter for rendering the pixel using path tracing. The budget allocation parameter is indicative of an amount of computing resources to be used for rendering the pixel using path tracing. The ANN is trained to determine, from the scene feature data, the budget allocation parameter based on the visual features indicated by the scene feature data. The determined budget allocation parameter is output from the ANN to control a rendering of the pixel using path tracing.

700

710 — Obtain scene feature data for a pixel to be rendered using path tracing

720 — Process scene feature data at ANN to determine budget allocation parameter

730 — Output budget allocation parameter to control rendering of pixel

Fig. 7

**EP 4 742 166 A1**

**Description**

Technical Field

The present disclosure concerns computer-implemented methods for rendering images of three-dimensional scenes. In particular, but not exclusively, the disclosure concerns computer-implemented methods, computing devices and computer program products for rendering images of three-dimensional scenes using path tracing.

Background

Rendering images or videos is a key component in many applications. For example, online gaming or virtual reality, VR, applications, which are increasingly popular forms of entertainment and social activity, involve the rendering of images of videos for display to a user. Rendering is a process of generating an image of a scene, which may include one or more three-dimensional models, e.g. representing objects in the scene.

Light transport simulation using path tracing may be used in rendering to generate photorealistic images by simulating the way light interacts with objects. The paths of many rays of light are traced as they travel through a scene, reflecting, refracting, and scattering until they eventually hit a light source or fade away. This technique is widely used in computer graphics, particularly in movie production, architectural visualization, and video game development, due to its ability to produce high-quality images that closely resemble real-world lighting. Rasterization, a more traditional and computationally efficient rendering technique compared to path tracing, does not address complex light interactions such as indirect lighting, caustics, soft shadows, and colour bleeding, whereas path tracing produces all of these effects naturally due to a realistic light transport simulation.

However, path tracing may be computationally expensive and time-consuming. The primary challenge arises from the need to trace a large number of paths to accurately capture the complex interactions of light in a scene. Each pixel in the image may require hundreds or thousands of samples (i.e. traced light paths) to reduce noise and achieve a visually appealing result. As an example, rendering an animated high-definition (HD) scene at 60 frames per second (fps) using path tracing with 100 samples per pixel (spp) requires $1280 \times 720 \times 100 \times 60 = 5,529,600,000$ traced paths per second. This intensive computational demand can make path tracing impractical for real-time or low latency applications.

The present disclosure seeks to solve or mitigate some or all of these above-mentioned problems. Alternatively and/or additionally, aspects of the present disclosure seek to provide improved methods for rendering images of three-dimensional scenes.

Summary

In accordance with a first aspect of the present disclosure there is provided a computer-implemented method for rendering an image of a three-dimensional scene using path tracing, the method comprising, for a pixel of the image to be rendered using path tracing:

    obtaining scene feature data for the pixel, the scene feature data indicating visual features of a location of the three-dimensional scene for depiction by the pixel in the image;
    processing, at an artificial neural network, ANN, the scene feature data to determine a budget allocation parameter for rendering the pixel using path tracing, the budget allocation parameter indicative of an amount of computing resources to be used for rendering the pixel using path tracing, wherein the ANN is trained to determine, from the scene feature data, the budget allocation parameter based on the visual features indicated by the scene feature data; and
    outputting, from the ANN, the determined budget allocation parameter to control a rendering of the pixel using path tracing.

As such, computing resources for path tracing are distributed across pixels in a more intelligent manner, thereby increasing computational efficiency. For example, certain areas of an image may require more path tracing samples (or longer light paths) to accurately depict complex lighting effects such as caustics, shadows, and reflections, while other areas may need fewer path tracing samples (or shorter light paths) due to simpler lighting conditions. The complexity of a particular pixel of the image may be represented by the scene feature data for the pixel. Known path tracing methods typically allocate a uniform number of path tracing samples (or a uniform maximum light path length) across all pixels, leading to inefficiencies where computational resources are wasted on areas that do not need as much detail, while other areas remain under-sampled and noisy. The presently-disclosed methods allow a trade-off between computational resources and image quality to be navigated in the following ways. First, for a given overall computational budget (e.g. the total number of path tracing samples available) the presently-disclosed methods distribute the samples per pixel optimally such that image quality is maximized. Second, for a given image quality, the presently-disclosed methods can optimize the allocation of samples to pixels such that significantly fewer computational resources are used to produce an equivalent image. Third, the presently-disclosed methods can operate in substantially real-time, that is, they can adapt to fluctuating computational resources (e.g. a mobile device with fluctuating CPU or GPU resources due to other ongoing processes).

While path tracing may inherently demand substantial computational resources, various techniques have been developed to try to make it more tractable. Importance sampling, denoising algorithms, variance reduction techniques, adaptive sampling, advanced light transport simulation methods, accelerated data structures, and leveraging modern hardware capabilities are examples of such known methods. Each of these known methods addresses a different aspect of the path tracing challenge, and a combination of these techniques may be employed in practice. The presently-disclosed methods build upon these known methods and can be used in combination with them, offering a dynamic and intelligent approach to resource allocation that further enhances the efficiency and quality of path tracing.

In contrast with known methods, the presently-disclosed methods are learnable. Existing approaches focus on fixed criterions that have been handcrafted based on a statistical approach. In contrast, the presently-disclosed methods employ machine learning, ML, and a learning framework that can be trained on real data. An advantage of a learnable approach is that it makes fewer assumptions than a parametric statistical approach. In particular, when combining budget allocation with other methods such as path reuse using reservoir models, additional data dependencies are introduced that are difficult to take into account in a statistical framework. Additionally, the presently-disclosed methods can learn patterns that are not easily modelled mathematically, and can be tuned to specific types of data. For example, a model specifically trained on only indoor scenes will tend to give better predictions on indoor scenes than a model trained on both indoor and outdoor scenes.

Further, the presently-disclosed methods are predictive. Accordingly, there is no need to collect several path tracing samples for a pixel prior to decision making pertaining to budget allocation. Instead, the presently-disclosed methods perform a prediction based on scene feature data for the pixel, without any path tracing having to have already been performed for that pixel. This is in contrast with some known methods (e.g. known adaptive sampling methods) which involve performing initial path tracing for a pixel (e.g. tracing a predetermined number of light paths for the pixel) in order to estimate variance, and then allocating a computing budget based on the estimated variance. The presently-disclosed methods are thus more efficient than such known methods. Additionally, while known adaptive sampling methods focus on sample count, the presently-disclosed methods can also optimise a multitude of other budget-related quantities, such as the maximum light path length, path termination probability, or hyperparameters of other path tracing optimisation methods. All of these values (each represented by a budget allocation parameter) can be optimised simultaneously.

Accordingly, the presently-disclosed methods provide improvements in the field of path tracing. By leveraging machine learning to dynamically allocate rendering resources based on scene complexity, the presently-disclosed methods address the inefficiencies of known path tracing approaches. This leads to faster rendering times and higher quality images, making photorealistic rendering more accessible and practical for a broader range of applications.

In embodiments, the ANN comprises a set of interconnected weights, which may be applied to input data (e.g. scene feature data) to process the input data. The ANN may be configured to receive scene feature data for a pixel as an input and to output budget allocation parameters, after applying the weights of the network to the input data. That is, the ANN may be configured to map scene feature data of a pixel to be rendered to a budget allocation parameter for rendering the pixel using path tracing. The budget allocation parameter may then be passed to a renderer or to another entity for controlling a rendering of the pixel.

'Training' an ANN as described herein refers to adjusting (or 'updating') the internal parameters of the ANN, e.g. the weights of the ANN that will be applied to the scene feature data to process the scene feature data. It will be understood that training of the ANN may occur prior to the processing of the scene feature data described above. That is, when the above-described method is performed, the training of the ANN may have already taken place, and the ANN is thus a 'trained ANN'. In alternative embodiments, training of the ANN occurs as part of the above-described method.

In embodiments, the method comprises: obtaining a system resource characteristic of a system configured to render the image using path tracing; and using the system resource characteristic and the determined budget allocation parameter to control the rendering, by the system, of the pixel using path tracing. The system may be a computing device such as a mobile device or laptop, for example. The system resource characteristic is indicative of a total amount of computing resources available for rendering the image. The system resource characteristic may be user-defined or automatically defined, e.g. based on computing resources that are currently available. In embodiments, the system resource characteristic is time-varying. That is, the system may have different amounts of available computing resources at different times, e.g. depending on other processes being performed by the system. In embodiments, the system resource characteristic is indicative of a total number of light paths to be traced for rendering the image. For example, the greater the amount of computing resources available, the more light paths may be traced for rendering the image. The total number of light paths for rendering the image may represent a total computation budget for rendering the image using path tracing.

As such, in embodiments, the ANN is configured to output a budget value per pixel that is independent of the total computation budget available (i.e. across all pixels), but rather represents the relative difficulty of rendering the specific pixel. Accordingly, the budget allocation parameter determined by the ANN may be a relative value, e.g. indicating that *x%* of the total computation budget should be allocated to that pixel, rather than an absolute value indicating a specific amount of resources. Such a relative value may be referred to as a 'raw', or 'intermediate', budget allocation value. In some such embodiments, a final budget value per pixel may be calculated by using these 'raw' values (generated by the ANN) in combination with the total computation budget available for the system. This means that changing the value of the total computation budget will automatically adapt the method to different hardware or other computational restraints. This variability to the total computation budget can also be done dynamically while rendering is already in progress. In alternative embodiments, the ANN is configured to output the final (e.g. absolute) budget value for the given pixel, e.g. taking into account the total computation budget for the system.

In embodiments, the method comprises rendering the pixel by performing path tracing using the determined budget allocation parameter. The path tracing may be performed by a light simulation model (also referred to as a 'path tracer'), for example. Where the determined budget allocation parameter is an absolute value (e.g. taking into account a system resource parameter such as the total computation budget for rendering the entire image), the path tracing may be performed using that value directly. Alternatively, where the budget allocation parameter is a relative value (e.g. a value that is independent of the total computation budget available), an absolute or final value may first be calculated, using the budget allocation parameter and a system resource parameter, and the absolute value may then be used for path tracing. In embodiments, the method comprises generating the image of the three-dimensional scene using the rendered pixel. For example, each of the pixels in the image may be rendered using the above-described approach. Alternatively, some of the pixels of the image may be rendered using the above-described approach, whereas others of the pixels may be rendered in a different manner, e.g. rasterization. In alternative embodiments, an image of the scene is not rendered. In embodiments, the method does not comprise rendering the pixel using the determined budget allocation parameter. However, in such cases it will be understood that the rendering of the pixel is still controlled on the basis of the determined budget allocation parameter. For example, rendering itself may be performed by a separate entity (optionally in a remote location) relative to the entity comprising the ANN.

In embodiments, the budget allocation parameter is indicative of a number of light paths to be traced for rendering the pixel using path tracing. The number of light paths to be traced for rendering a pixel may also be referred to as the number of samples per pixel (spp). That is, a given sample in the context of path tracing refers to a given light path to be traced. Higher spp can reduce noise but increases computational cost. Accordingly, a pixel may be allocated a particular number of samples (or light paths) depending on the scene feature data for that pixel. Pixels corresponding to locations in the scene having high complexity may be allocated more path tracing samples, for example, whereas pixels corresponding to locations in the scene having low complexity may be allocated fewer path tracing samples.

In embodiments, the budget allocation parameter is indicative of a maximum path length of light paths to be traced for rendering the pixel using path tracing. The maximum path length controls how far a light path can travel before termination. Longer paths may be able to capture more detailed interactions, but at the expense of higher computational cost (i.e. more computational resources). In embodiments, the budget allocation parameter is indicative of a termination probability of light paths to be traced for rendering the pixel using path tracing. The termination probability defines the probability that a path will be terminated at each interaction with objects in the scene. Lower termination probabilities result in longer paths and more detailed images but also higher computational costs (i.e. more computational resources). Other budget allocation parameters may be used in alternative embodiments. The budget allocation parameter may be indicative of several of the above-mentioned values. For example, the budget allocation parameter may be indicative of both a number of light paths and a maximum light path length. Alternatively, different values may be represented by different budget allocation parameters. Any of these parameters may be optimized with the same learning framework outlined herein, and multi-objective learning can be used to simultaneously optimize multiple budget allocation parameters. As mentioned above, the budget allocation parameters that are determined by the ANN may not be the 'final' budget values discussed above (e.g. absolute number of samples, maximum path length, etc.), but rather may be intermediate or relative representations which are nevertheless indicative of such values. The final budget values may then be determined using a system resource characteristic such as the total number of samples available across the entire image.

In embodiments, the scene feature data for the pixel is derived using a ray tracing process. In some such embodiments, the visual features indicated in the scene feature data comprise visual features at a first intersection point of a light ray, cast through the pixel, with an object and/or surface in the scene. This initial interaction provides information about the visible surface at the pixel, which may then be used to extract features directly related to the geometry and/or materials of the scene. Accordingly, scene features relevant for the pixel in question can be obtained in an efficient manner, e.g. by considering only the first intersection point of a single light ray, rather than tracing the entire path of the light ray or of multiple light rays for the pixel.

In embodiments, the visual features comprise one or more of: geometric features indicating a geometry of one or more objects and/or surfaces in the scene; and material features indicating physical and/or optical properties of one or more objects and/or surfaces in the scene. Geometric features may include, for example, depth, normals, edges, etc. Depth indicates a distance from the camera to the first intersection point. Normals, or the normal vectors at the intersection points, provide information about the orientation of surfaces, modulating how incoming light interacts with the surface. Edge detection identifies edges in the scene where there are significant changes in depth or normal, corresponding to boundaries of objects and/or regions where aliasing artifacts are more likely to occur.

Material features may describe the physical properties of materials being represented, and may include, for example, albedo, specularity, roughness, metalness, transparency, refractive index, thickness, etc. Albedo refers to the diffuse colour of surfaces in the absence of specific lighting effects. Different materials reflect light differently, and areas with highly varied albedo may require more path tracing samples to capture these variations accurately. Specularity indicates the reflective properties of materials. Surfaces with high specularity can create sharp reflections and highlights that require a higher sampling density to accurately capture. Roughness indicates how rough or smooth a surface is. Smooth surfaces can produce detailed reflections, while rougher surfaces scatter light more diffusely. Metalness indicates whether a surface behaves like a metal or a non-metal. Metallic surfaces have distinct reflective and colour properties compared to non-metallic surfaces. Transparency defines how much light can pass through the material, indicating if the material is transparent, translucent or opaque. Refractive index indicates how much light bends when entering the material, which affects refraction effects in transparent materials. Thickness of a material can influence transparency and refraction effects.

In embodiments, the visual features comprise auxiliary information, alternatively or additionally to geometric and/or material information. Particular three-dimensional environments or video game engines may provide such information. Examples of such information include surface type (e.g. terrain, water, character, static object), other physical properties (e.g. friction, elasticity, density, etc.), weather effects (e.g. defining interaction with conditions such as wetness or snow), and particular interaction effects (e.g. how particle systems should interact with a given surface). Such auxiliary information may affect the complexity of the image in particular regions, and may thus influence optimal budget allocation for path tracing.

In embodiments, the scene feature data for the pixel is derived using a geometry buffer, G-buffer, obtained using a rasterization process. A G-buffer is a collection of textures that stores various geometric and material properties for each pixel, and may include data such as depth, normal vectors, albedo, etc. A G-buffer can be obtained from an efficient rasterization process, skipping the fragment shading step. By using a G-buffer, pre-computed information can be utilized that allows for a comprehensive analysis of the scene obtained in an efficient manner.

In embodiments, the scene feature data is indicative of a number, location and/or type of light sources in the scene. Accordingly, the number, location and/or type of light sources may be taken into account when determining the path tracing budget allocation parameter for the pixel, thereby providing a more intelligent distribution of resources for rendering the image.

In embodiments, the ANN is trained using a quality score indicative of a visual quality of images rendered using budget allocation parameters determined by the ANN. In embodiments, the ANN is trained based on a comparison between images rendered using budget allocation parameters determined by the ANN and ground truth images. Such a comparison may involve the calculation of a loss function, such as an L1 or L2 loss, structural similarity index, etc. Accordingly, the ANN can be trained to optimise a visual quality of produced images and/or to replicate ground truth images.

In embodiments, the ANN is trained based on a comparison between budget allocation parameters determined by the ANN for rendering pixels of a training image and predetermined budget allocation parameters for rendering the pixels of the training image. As such, the ANN may be trained without having to actually render images using the determined budget allocation parameters, but rather by comparing the determined budget allocation parameters with ground truth values. In embodiments, the predetermined budget allocation parameters are derived using a greedy heuristic-based algorithm configured to: receive a plurality of renderings of a training image, each rendering generated using a different budget allocation parameter that is uniform across all pixels in the training image; and output an optimised budget allocation parameter for each pixel in the training image. This allows ground truth estimates for the budget allocation parameters to be derived in an efficient manner, e.g. without having to perform an exhaustive search.

In accordance with another aspect of the disclosure there is provided a computing device comprising:

one or more processors; and
memory;
wherein the computing device is arranged to perform, using the one or more processors, any of the methods described above. The computing device may comprise or be arranged in a user device, for example.

In accordance with another aspect of the disclosure there is provided a computer program product arranged, when executed on a computing device comprising one or more processors and memory, to cause the computing device to perform, using the one or more processors, any of the methods described above.

It will of course be appreciated that features described in relation to one aspect of the present disclosure described above may be incorporated into other aspects of the present disclosure.

Description of the Drawings

Embodiments of the present disclosure will now be described by way of example only with reference to the accompanying schematic drawings of which:

Figure 1 is a schematic workflow diagram showing an image rendering framework in accordance with embodiments;

Figure 2 shows an example ray tracing method in accordance with embodiments;

Figure 3 shows images illustrating the effect of maximum path length on rendering quality, in accordance with embodiments;

Figure 4 is a schematic workflow diagram showing a training process in accordance with embodiments;

Figures 5A-5B shows results of a greedy heuristic-based algorithm for estimating optimal budget allocation parameters, in accordance with embodiments;

Figure 6A-6D shows images of a scene rendered with a path tracer using different numbers of samples per pixel, and mean square error for different parts of an image and for different numbers of samples per pixel, in accordance with embodiments;

Figure 7 is a flowchart showing the steps of a method for rendering an image in accordance with embodiments; and

Figure 8 is a schematic diagram of a computing device in accordance with embodiments.

Detailed Description

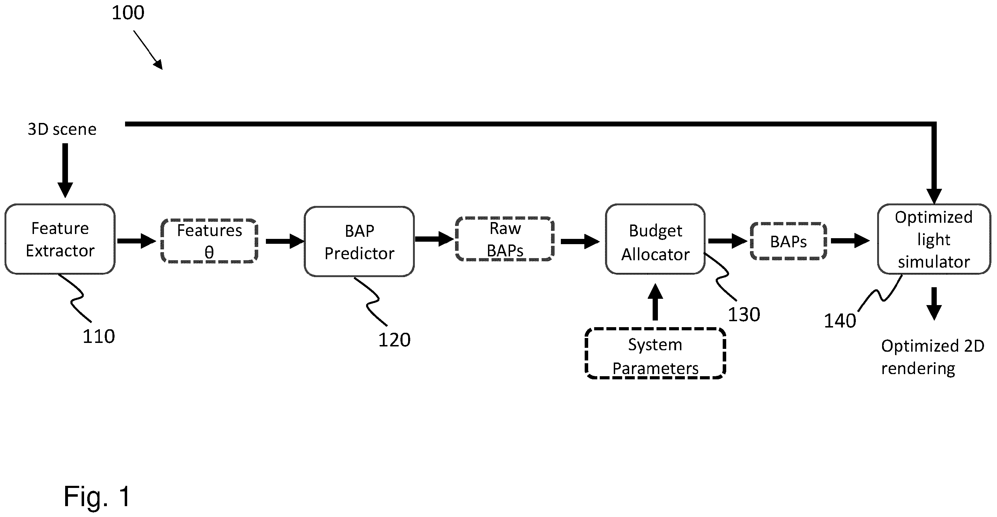

Figure 1 shows schematically an example of an image rendering framework 100 according to embodiments. The framework 100 is used to generate rendered images of three-dimensional (3D) scenes. The framework 100 may be implemented by a computing system comprising one or more computing devices. The computing system may comprise a user device. Such a user device may alternatively be referred to as a 'display device' or 'displaying device', since the user device may be operable to produce images for display to a user. Such images may be displayed on the user device itself, or on a separate device such as a monitor. The user device may comprise a mobile phone, personal computer, video games console, VR headset, tablet computer, etc. Additionally or alternatively, the computing system may comprise a server.

The input to the framework 100 is a 3D scene comprising assets (e.g. meshes) located in a world space. This may be a standard representation in many 3D graphics engines or game engines, for example. A feature extractor 110 then extracts relevant scene feature data for each pixel, from the scene. The scene feature data is input to a budget allocation parameter (BAP) predictor 120, which predicts raw BAPs for the pixel. A budget allocator 130 performs a pixel-wise budget allocation, taking both the raw BAPs and compute constraints (e.g. maximum available compute budget) into account. The resultant 'final' BAPs represent compute budget parameters that control the rendering process for each pixel individually (e.g. number of samples, maximum path length, etc.). Along with the 3D scene, the BAPs are then used by a light simulator 140, also referred to as a 'path tracer', which adjusts its rendering strategy according to the BAPs and outputs an optimized 2D rendering. Each of the components of the framework 100 will be described in more detail below.

The feature extractor 110, firstly, is configured to analyse the 3D scene and gather data on a pixel basis to inform the adaptive allocation of computational resources. This data gathering can be achieved in various ways, for example based on ray tracing or rasterization.

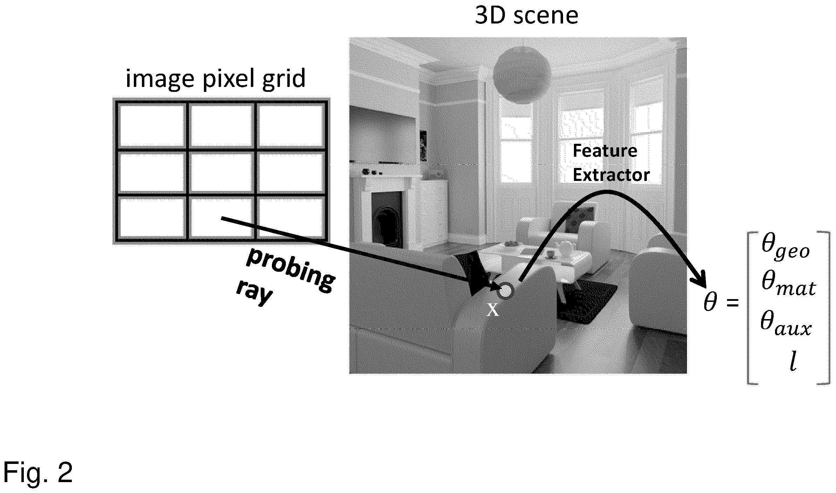

An example ray tracing-based method of gathering scene feature data is illustrated in Figure 2. As shown in Figure 2, a single probing ray is cast from the camera through pixel $k$ and the first intersection point $x$ with the scene geometry is determined. This initial interaction provides information about the visible surface at each pixel, which can be used to extract features directly related to the geometric and material properties of the scene. These features can be broadly categorized into geometric features, $\theta_{geo}$, material features, $\theta_{mat}$, and auxiliary information, $\theta_{aux}$.

Geometric features include depth, which is the distance from the camera to the first intersection point. Normals, or the normal vectors at the intersection points, provide information about the orientation of surfaces, modulating how incoming light interacts with the surface. Additionally, edge detection identifies edges in the scene where there are significant changes in depth or normals, corresponding to boundaries of objects and regions where aliasing artifacts are more likely to occur.

Material features describe the physical properties of the material being represented. These include, but are not limited to, the following: albedo (base color), specularity, roughness, metalness, transparency, index of refraction, thickness, etc. Auxiliary information may be provided by specific game engines or 3D environments. For example, surface type (e.g. terrain, water, character, or static object classification), other physical properties (e.g. friction, elasticity, or density, typically used in physics simulation), weather effects (defining interaction with conditions like wetness or snow), and particle interaction effects (e.g. how particle systems should interact with the surface).

An alternative to a ray tracing-based method of obtaining scene feature data (which may also be used in combination with the ray tracing-based method) is a rasterization-based method involving a G-buffer. A G-buffer can be obtained from an efficient rasterization pass, skipping the fragment shading step. A G-buffer is a collection of textures that store various geometric and material properties for each pixel in the scene, typically including data such as depth, normal vectors, albedo (base color), and material properties. By using a G-buffer, the feature extractor 110 can access precomputed information that allows for a comprehensive analysis of the scene.

In the ray tracing scenario, the extracted features are concatenated into a single feature vector $\theta = [\theta_{geo}, \theta_{mat}, \theta_{aux}]$ for downstream input into the BAP predictor 120 represented by a Multi-Layer Perceptron (MLP) or a Transformer model, for example. Alternatively, G-buffers may be encoded as different channels of images for downstream input into a Convolutional Neural Network (CNN) or compatible neural network architectures (e.g. Residual Network, Vision Transformer, etc.). In this case, the features may be represented as a multi-dimensional image $\theta_G \in R^{h \times w \times g}$ (h: height, w: width, g: number of buffers).

The number, location and type of light sources in the scene may affect the optimal BAP selection. To incorporate this information into the method, each light source is described by a vector specifying location, direction, type, luminosity, etc. Individual light sources $L_1$, $L_2$, ... are then mapped onto embedding vectors using the embedding function $e_{light}$: $R^{li} \rightarrow R^{le}$, where li is the input dimension of the lights and $le$ is the embedding dimension. They are then added to obtain a global representation of the lights in the scene $l = e_{light}(L_1) + e_{light}(L_2) + \cdots$. The function $e_{light}$ may be represented by an MLP and trained end-to-end with all the other components of the method. The lights are then appended to the scene feature vector, $\theta$.

The BAP predictor 120 uses machine learning to optimize the rendering process in a 3D graphics pipeline. The BAP predictor 120 comprises an artificial neural network (ANN), which is configured to predict raw BAPs which control the final budget allocation. The ANN may comprise any combination of weights connected in a network and having a non-linear function (e.g. an activation function). Example instantiations comprise multiple layers of weights and activation functions. Such layers of interconnected weights form an artificial neural network. Such embodiments may be trained with back-propagation of errors computed at the output layer, using gradient descent methods, for example. In alternative embodiments, the methods described herein are implemented using a machine learning model other than an ANN. For example, a support vector machine may be used to implement at least some of the presently-disclosed methods.

The BAP predictor 120 may be implemented in different ways: for example, MLP and Transformer-based architectures can be used to process the feature vector $\theta$ originating from a feature extractor 110 that uses a ray tracing-based method of feature extraction. Alternatively, CNN or compatible architectures can be used to process the feature map $\theta_G$ originating from a feature extractor 110 that uses a rasterization approach. Each of these example architectures and their functionality will be described separately.

An MLP is formalized as a function $f: R^m \rightarrow R^b$, $\theta \mapsto f(\theta)$, where m is the size of the feature vector and $b$ is the dimensionality of the BAPs. It includes the following components. Input layer: the input to the BAP predictor 120 is the feature vector extracted by the feature extractor 110. Hidden layers: the neural network contains 2 hidden layers, which allow it to model complex relationships between the input features and the desired BAPs. These hidden layers may use an activation function such as a Leaky ReLU (Leaky Rectified Linear Unit) activation function to introduce nonlinearity, enabling the network to learn more intricate patterns. Other activation functions, such as ReLU and tanh, can be used in place of Leaky ReLU in other embodiments. Output layer: the output layer of the network produces the predicted raw BAPs. Each output neuron corresponds to a specific parameter that is to be controlled, such as the number of light paths to be traced per pixel or the maximum path length for light rays. The network outputs continuous values via a linear activation function.

A Transformer network is formalized as a function $f: R^m \times R^m \times R^m \times ... \rightarrow R^b \times R^b \times R^b \times ...$, $\theta \mapsto f(\theta)$. The main conceptual difference with respect to the MLP is that the Transformer takes multiple feature vectors (from different pixels) as input. This has the advantage that correlation and mutual dependencies between pixels can be exploited for more accurate prediction of BAPs, at the expense of higher computational requirements. The Transformer architecture can relate pixels to each other via a context window, which can be global or local. A global context window represents the extreme case whereby $\theta$s corresponding to *all* pixels are provided as input. This allows the model to process spatially distant relationships (e.g. two distant objects sharing the same physical properties) but it may lead to expensive computations due to the required size of the context window. A local context window involves providing a neighbourhood of $\theta$s as input (e.g., $\theta$s corresponding to a central pixel and its direct neighbours). This allows for the modelling of spatially close dependencies at much lower computational cost. The neural network architecture may use an encoder-decoder Transformer architecture. The feature vectors ($\theta$s) are represented as token embeddings in the encoder, positionally encoded, and then processed through N > 2 multi-headed attention layers. The output domain is the space of raw BAPs, represented by continuous output embeddings. To this end, instead of predicting discrete output tokens, a linear layer predicts continuous raw BAPs for each input $\theta$.

A CNN or compatible architecture (e.g. U-net) may implement a function between multi-dimensional images formalized as $f: R^{h \times w \times g} \rightarrow R^{h \times w \times b}$, $\theta_G \mapsto f$

($\theta_G$). This type of architecture can naturally make use of shared information between neighbouring pixels, due to the receptive field size obtained via convolutional layers or visual patches. Due to their highly optimized implementation on current generation GPU hardware, CNN architectures are also fast to compute. The input to the CNN is a feature map consisting of buffers that is generated by the feature extractor 110. The features extracted are concatenated into the channel dimension, leading to a g-dimensional feature map with the same spatial resolution as the rendered image, i.e. one dense feature per pixel. Depending on the features used by the extractor 110, it may be necessary to normalize or encode them such that their actual values are roughly normal distributed around 0. This helps gradient flow and therefore enhances the learning of the network. The output of the CNN is a feature map with the same spatial resolution as the rendered image and one or more output features of dimension b. One of these features is the raw BAP, but it is possible to output additional features, either due to their usefulness in further downstream applications or as additional supervision signals within the learning framework. The CNN may be relatively unconstrained in design, however it may comprise an encoder/decoder architecture that outputs feature maps of the same resolution as the input. The encoder consists of multiple convolution layers and activation functions that downscale the intermediate features spatially over multiple steps, leading to a larger receptive field and more abstract extracted features. The decoder upsamples the spatial resolutions again and translates the highly abstract features of the later parts of the encoder and the more local features in the earlier parts of the encoder to the output features.

Regardless of the particular architecture used to implement the BAP predictor 120, the BAP predictor 120 may be trained using gradient descent methods. This will be described further below.

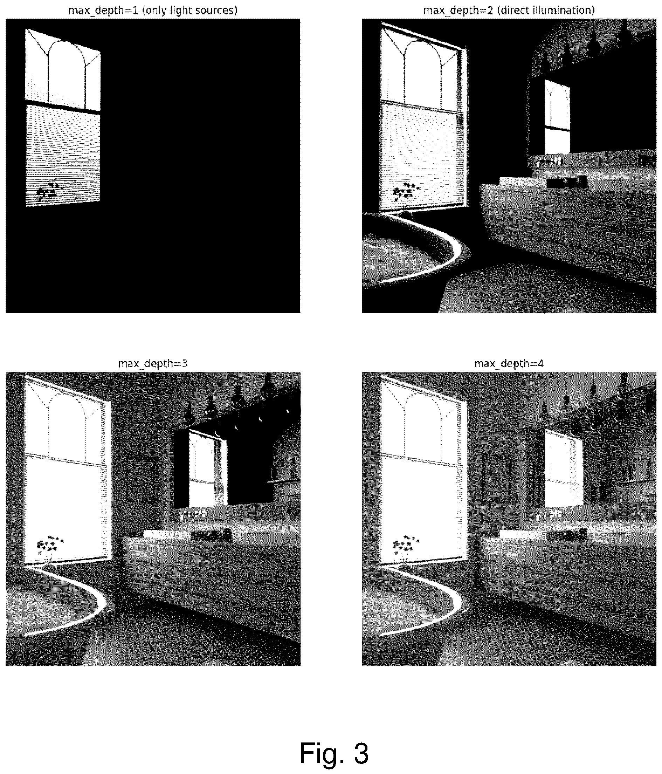

'Raw' budget allocation parameters (BAPs), generated by the BAP predictor 120, represent quantities that are being optimized, and which control aspects of the path tracing-based rendering pipeline. These include, but are not limited to, samples per pixel (spp), maximum path length, path termination probability, and hyper-parameters of combination approaches, etc. The number of samples per pixel determines the number of light paths traced per pixel. Higher spp can reduce noise but increases computational cost. Maximum path length controls how far a light path can travel before termination. The effect of path length (or depth) on rendering quality is shown in Figure 3. As illustrated in Figure 3, longer paths can capture more detailed interactions but require more computation. For example, a path length of 1 (top left) shows only light sources, a path length of 2 (top right) depicts direct lighting, whereas indirect lighting is considered from a path length of 3 (bottom left), with each additional path length (bottom right) adding more nuance to the data. Accordingly, some parts of the image may need longer paths for accurate light effects, whereas short paths suffice for other parts. Path termination probability indicates the probability that a path will be terminated at each interaction. Lower termination probabilities result in longer paths and more detailed images but also higher computational costs. Typically, path termination probabilities are used with the Russian roulette approach to assure the preservation of the unbiasedness of the estimator. Hyper-parameters of combination approaches refer to hyper-parameters of other approaches to optimise path tracing, which can be controlled using the methods described herein. Multi-objective learning can be used to simultaneously optimize multiple BAPs.

The raw BAPs that are produced by the BAP predictor 120 are intermediate representations which may be used by the budget allocator 130. The raw BAPs may be denoted as a height $\times$ width matrix $B_{raw} \in R^{h \times w}$. The raw BAPs can be considered as unnormalized, continuous versions of the final BAPs. More concretely, the relationship between raw BAPs and final BAPs is given as follows. For each final BAP there is a corresponding raw BAP. Whereas some of the final BAPs are quantized or discretized as integers, raw BAPs may be continuous values. Final BAPs are normalized, whereas raw BAPs may not be normalized.

The budget allocator 130 comprises an algorithm that produces the final budget allocation values for each pixel. The task of the budget allocator 130 is to bring together the raw BAPs produced by the BAP predictor 120 with system parameters representing current computational constraints (e.g. maximum ray budget) of the computing system. The system parameters are parameters that describe constraints and targets on the BAPs imposed by the computing system (e.g. a user device). The system parameters may be user-defined, or automatically defined, for instance based on currently available computational resources. The system parameters may include box constraints and/or total constraints. Box constraints may comprise, for example, upper and/or lower boundaries for the BAPs (e.g. 10 < maximum number of samples per pixel < 100; or 0.25 < path termination probability < 0.75). Total constraints may control the total available budget to be allocated (e.g. total number of samples $T$ < 10,000,000; total number of path lengths $T$ < 25,000,000,000).

The output of the budget allocator 130 is a pixel-wise set of budget allocation values such as the number of samples, maximum path length, and other relevant metrics that control the quality and computational cost of the rendering. For instance, in regions of the scene with complex lighting or high detail, more samples or longer path lengths may be allocated to ensure high-quality rendering. Conversely, in simpler regions, it might reduce the computational effort to save resources. The budget allocator 130 is configured to perform the following steps for each BAP. First, total system constraints are applied. Let $B_{raw,i}$ be the raw BAP for the i-th pixel, then the total constraint is applied as $\tilde{B}_{raw} = \frac{B_{raw}}{\Sigma_i B_{raw,i}} * T$. Any box system constraints may then be applied, and discretization may be performed. For any BAPs that are integer values (e.g. spp) a component-wise rounding operation is performed, $B = \lfloor \tilde{B}_{raw} \rceil$. The rounding can lead to a violation of the total constraint by overshooting or undershooting, so a heuristic correction (e.g. adding samples to the pixels with the lowest count, or vice versa) is applied to meet the constraint exactly. For any BAPs that are not integers but otherwise quantized a hard assignment to a set of candidate quantization values $\mathcal{C} = \{c_1, c_2, c_3, ... \}$ can be used as follows (component-wise): $B = \arg min_j \|z_j - c_j\|$. Discretization and box constraints might lead to violation of the total system constraint, which may then be normalized again such that $\Sigma_i B_i = T$. The budget allocator 130 produces the final BAP values, i.e. the target quantities which control aspects of the rendering process. Each BAP may be denoted as a matrix of numbers $B \in R^{h \times w}$.

The light simulator 140 is a conditional light simulation model (e.g. path tracer). It is formalized as the function $r_B: S \to R^{h \times w \times o}$ that is conditioned on the BAPs $B$. The light simulator 140 takes as input a scene s ∈ S and returns an image where o is the number of image channels (typically 3 for RGB output).

In embodiments, the light simulator 140 is configured to perform path tracing using Monte Carlo sampling. This is used to simulate the paths of light as they bounce around the scene and approximate the integral in the rendering equation: $L_o(x, \omega_o) = L_e(x, \omega_o) + f_\Omega f_r(x, \omega_i, \omega_o) L_i(x, \omega_i) (\omega_i \cdot n) d\omega_i$, where $L_o(\omega_o)$ is the outgoing radiance at point $x \in R^3$ in direction $\omega_o$ ∈ $R^3$, $L_e(x, \omega_o)$ is the emitted radiance from the surface at point $x$, $f_r(x, \omega_i, \omega_o)$ is the bidirectional reflectance distribution function (BRDF), describing how light is reflected at point $x$, $L_i(x, \omega_i)$ is the incoming radiance at point $x$ from direction $\omega_i$ ∈ $R^3$ and $(\omega_i \cdot n)$ is the cosine of the angle between the incoming light direction $\omega_i$ and the surface normal $n \in R^3$. In particular, a ray is generated from the camera through a pixel on the image plane. The ray intersects with the scene geometry, hitting the first point $x$. At the intersection point $x$, the path tracer evaluates the rendering equation. This involves sampling directions on the hemisphere above $x$ to trace secondary rays, evaluating BRDF and incoming radiance for each sampled direction, and computing the contribution of each sample and averaging them to estimate the outgoing radiance. The process is recursively repeated for every secondary ray, tracing the paths of light as they bounce off surfaces. Each recursion adds to the final radiance estimate. Paths are probabilistically terminated using techniques such as Russian roulette, which balances the trade-off between computational cost and accuracy.

The image rendering framework 100 may comprise more, fewer and/or different components in alternative embodiments. For example, one or more of the feature extractor 110, BAP predictor 120, budget allocator 130 and light simulator 140 may be omitted in some embodiments.

As mentioned, the BAP predictor 120 comprises an artificial neural network. In some embodiments, other components of the framework 100 also comprise artificial neural networks. For example, one or more of the feature extractor 110, budget allocator 130 and/or the light simulator 140 may comprise or use artificial neural networks. In alternative embodiments, only the BAP predictor 120 comprises a neural network, and the other components do not comprise neural networks. Example training processes for the functions instantiated by neural networks (e.g. the BAP predictor 120) will now be described. During training, the framework 100 is provided with training data and a loss function quantifies how well the framework 100 performs. Backpropagation is then used to backpropagate the error through the framework 100 in an end-to-end manner.

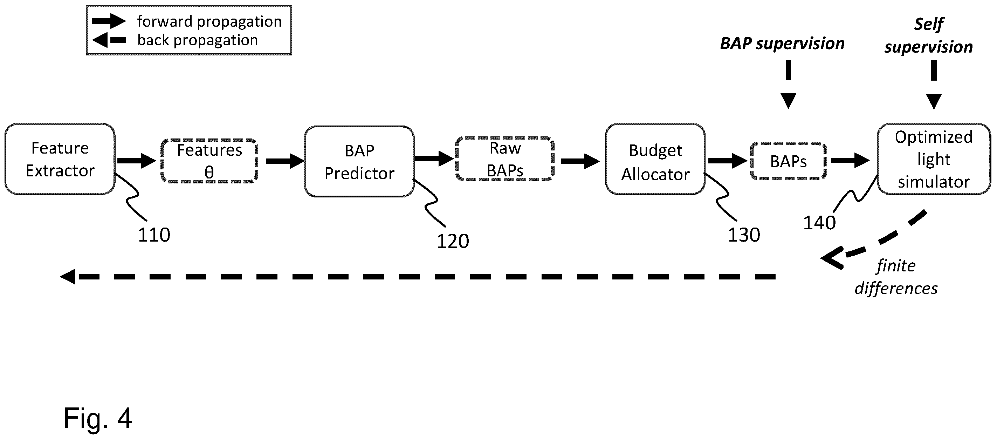

Figure 4 shows an example of how gradients are propagated back through the framework 100. Training may be based on a diverse dataset of 3D scenes, which may cover a wide variety of environments, lighting conditions, material properties and geometric complexities to ensure that the framework 100 can generalize well to different scenarios. As illustrated, there may be two sources of supervisory signals, entering the framework 100 at two different points. First, BAP supervision uses ground truth estimates for the BAPs (derived, for example, using a greedy search algorithm, as will be described below), and losses between the ground truth BAPs and the BAPs determined using the framework 100 are calculated. Second, self-supervision involves comparing the image outputs of the framework 100 against ground truth images, and using image-based loss functions to train the framework 100 end to end. Either one of these supervision approaches can be used in isolation, or in conjunction with each other (e.g. by combining the respective loss functions).

In the case of BAP supervision, ground truth estimates for the BAPs, denoted as $B_{GT}$, are created using an exhaustive search or greedy heuristic-based algorithm. The output of the budget allocator 130 is then passed into loss functions comparing the output with the ground truth (GT) target values. Some BAPs (e.g. spp) may be quantized or integer-valued. However, the hard quantization operation that creates them from continuous raw BAPs is not differentiable. Therefore, during training a soft quantization function may be used for the backward pass. That is, during forward calculation, hard quantization is used to obtain the actual target values, whereas for gradient calculation and backpropagation, a soft quantization operator is used. This is defined as follows. Let $\mathcal{C} = \{c_1, c_2, c_3, ... \}$ be the quantization targets (e.g. integer numbers for spp). Let $\sigma_\gamma$ be the sigmoid function $\sigma_\gamma(x) = \frac{1}{1+e^{-\gamma x}}$ where $\gamma$ controls

the steepness of the sigmoid. $B_{soft} = \sum_j \frac{\exp\left(\sigma_\gamma(\|\tilde{B}_{raw} - c_j\|)\right)}{\sum_k \exp\left(\sigma_\gamma(\|\tilde{B}_{raw} - c_k\|)\right)}$ is then the softly quantized version of the BAP and gradients are calculated with respect to this function. The different forward/backward passes can be implemented in machine learning frameworks (e.g. Pytorch, Tensorflow) via a stopgradient command, as $\overline{B} = stopgradient(B - B_{soft}) + B_{soft}$. This makes sure that the hard quantization $B$ is used in the forward pass and the soft quantization $B_{soft}$ in the backward pass. The loss function can then be calculated using L1 or L2 distance with the soft quantized targets, e.g. $\mathcal{L}_1 = |\overline{B} - B_{GT}|$; $\mathcal{L}_2 = |\overline{B} - B_{GT}|^2$. In embodiments, the budget allocator 130 has no learnable parameters, but it allows for gradients to propagate back into the BAP predictor 120 and feature extractor 110.

As mentioned, the ground truth BAPs may be obtained via an exhaustive search. The search space for the best resource allocation may, however, be prohibitively large to perform an exhaustive search for the global optimum. For instance, for optimizing spp, the search space is in the order of $|spp|^{h \times w}$ where $|spp|$ is the number of different possible spp bins. Instead, a greedy heuristic-based algorithm can be run that efficiently optimizes the BAPs at the expense of constituting a local minimum.

For the example BAP of spp, the greedy heuristic-based algorithm takes as input: renderings at different uniform target BAPs, e.g. $RE_1$, $RE_2$, ... , $RE_{spp\_max}$, which are renderings at all candidate spp from 1 to spp_max (multiple images); a target spp $T$ (integer value); and $GT$, a ground truth rendering of a scene (single image). The algorithm includes an initialization stage, and stages A-C. In the initialization stage, Mean-Square Error (MSE) matrices $E_i = |GT - RE_i|^2$ are calculated. A budget $BUD$ is set as 0; the budget is built up in the following stage (stage A) and it allows for spp to increase above $T$ for some pixels. An spp matrix $S$ (same size as image) is initialized with the target spp. A current error matrix E is initialized with $E_T$ (corresponding to the error matrix for a uniform sampling at spp=$T$). In stage A, for each pixel $k$, if a lower MSE can be obtained for a lower spp value $T_{new} < T$: (i) the $k$-th pixel in $S$ is set to $T_{new}$ to reflect the lower spp value; (ii) the k-th pixel in E is set to $|GT - RE_{T_{new}}|^2$ to reflect the lower MSE; and (iii) the budget is increased as $BUD \leftarrow BUD + (T - T_{new})$. Stage B involves looking for pairs of pixels $k$, $l$ such that the MSE can be decreased (by as much as possible) by increasing spp for the $k$-th pixel. This is counteracted by increasing MSE (by as little as possible) by decreasing spp for the $l$-th pixel. The budget increases/decreases if the difference between the spp increase and the spp decrease is not 0. This process stops when there are no such pixel pairs left or the budget reaches 0. After the process stops, $BUD$, $S$, and $T$ are updated with the new values. In stage C, if there is budget still remaining (i.e. $BUD > 0$), pixels are ranked according to which give the largest MSE decrease for each spp spent. The remaining budget is then spent on these pixels until the budget reaches 0 or no further minimization is possible. The algorithm thus outputs an optimized spp matrix $S$ and error matrix $E$.

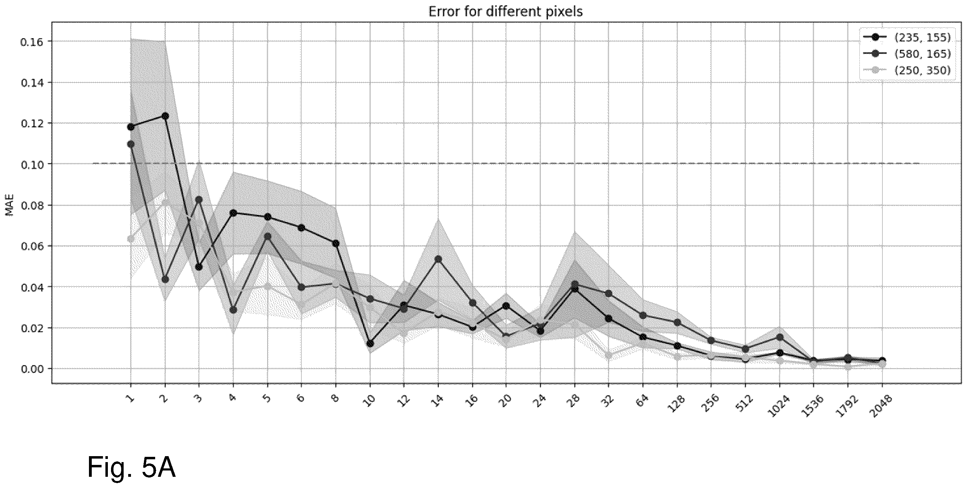

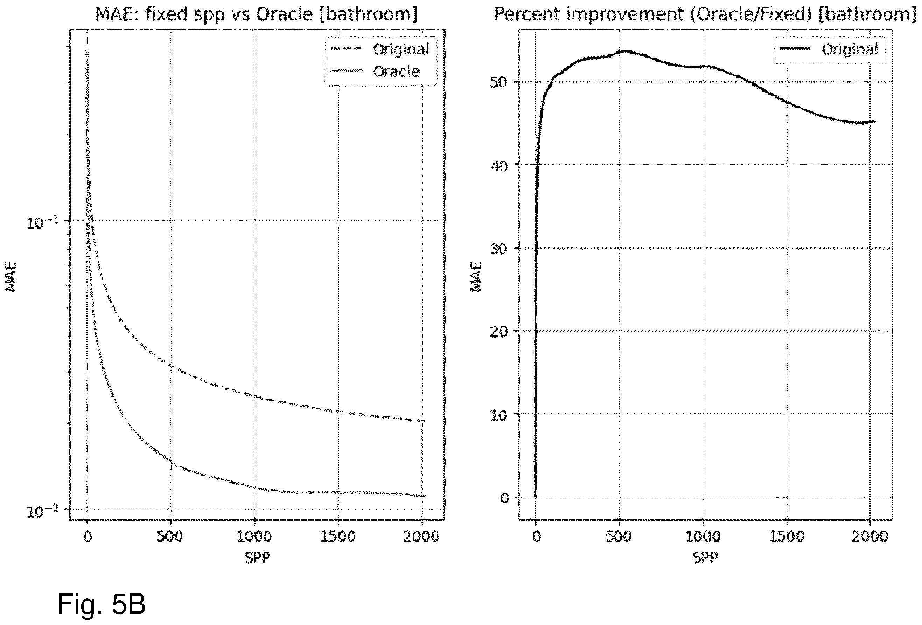

Figures 5A-5B show exemplary results of the greedy heuristic-based algorithm for a bathroom scene (e.g. the scene shown rendered in Figure 2). Figure 5A shows a plot of Mean Absolute Error (MAE) vs spp, between the ground truth rendering of the pixel and a rendering at the corresponding spp. As can be seen, MAE decreases, albeit not always in a monotonous way, as spp increases. Figure 5B shows, in the left panel, the average MAE (y axis) averaged across all pixels for renderings at different spp (x axis). The right panel shows the percentage improvement in MAE based on the data in the left panel. When comparing the error for the original image (with uniform spp) to the image optimized with the greedy algorithm, significant savings in image quality can be obtained for the same sample budget. In the 100-1000 spp range, the greedy algorithm depicts an over 50% improvement in Mean Absolute Error (MAE). Accordingly, the greedy heuristic-based algorithm is an efficient way of estimating ground truth BAP values, without having to perform an exhaustive search for a global optimum.

In the case of self-supervision (as opposed to the BAP supervision described above), rendering outputs are used to train the BAP prediction implicitly and indirectly, without encoding actual target BAPs into the learning process. This may be advantageous where the creation of ground truth BAPs is cumbersome or even infeasible, which may be the case for some target parameters. For self-supervision, let $GT$ be the ground truth image and $RE$ be the BAP-optimized rendering (obtained using the framework 100). To measure image quality, a number of photometric losses can be used, such as $\mathcal{L}_1 = |RE - GT|$, $\mathcal{L}_2 = |RE - GT|^2$, and more human perception oriented losses such as Structural Similarity Index (SSIM), and Learned Perceptual Image Patch Similarity (LPIPS). For entropy estimation, which is useful for preparing an image for transport in a streaming setting, a neural network based importance map can be used. Lastly, in order to propagate gradients back through the rendering process, the rendering may be implemented in a differentiable renderer.

In some cases, some of the BAPs may not be amenable to automatic differentiation. For instance, the spp parameter is an integer value specifying how many rays are passed through a given pixel. This parameter cannot be differentiated with respect to the loss function. However, artificial gradients can be created via a finite differences approach. To this end, an additional rendering operation may be performed. Let $RE$ be the render performed with the currently predicted BAPs. Then another render $RE_\varepsilon$ is performed, with a modified BAP defined as $B_\varepsilon = B - \varepsilon$. Now the gradient of the loss function with respect to the BAP can be estimated as $\frac{\partial \mathcal{L}}{\partial B} = \frac{\mathcal{L}(RE) - \mathcal{L}(RE_\varepsilon)}{\varepsilon}$. This artificial gradient can then be used to further propagate information into the BAP predictor 120 and feature extractor 110.

Accordingly, embodiments of the present disclosure address the inefficiencies of known path tracing methods by dynamically allocating computational resources based on the complexity of different parts of the image. Machine learning techniques are leveraged to intelligently distribute a path tracing rendering budget, focusing more resources on challenging areas and fewer resources on simpler areas.

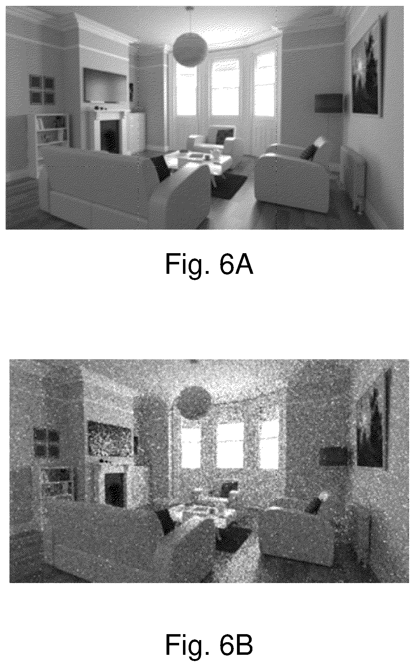

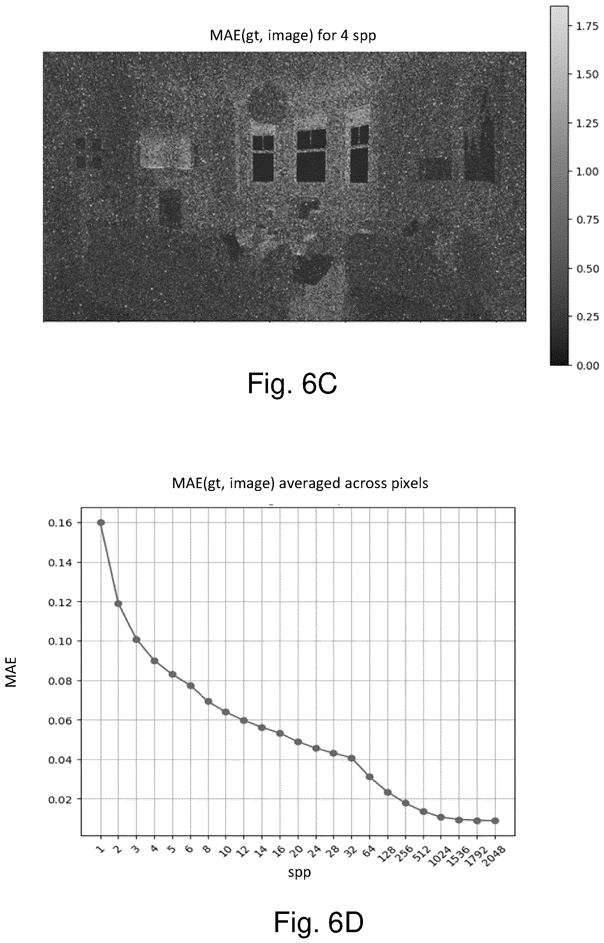

Figure 6 shows renderings of a living room scene using a path tracer at high spp (8192 spp, Figure 6A) and low spp (4 spp, Figure 6B). The absolute difference between the 8192 and 4 spp renderings is shown in Figure 6C, which shows regions of low error and regions of relatively high errors. This indicates that the error is not randomly distributed or spatially uniform but rather dependent on location, angle, and material properties of surfaces relative to the light sources. In particular, the image shows that there is spatial structure to the error, with low error for direct lighting (windows) and high error at specific surfaces (around the window, top of furnace, and upward facing surfaces of the sofas). This spatial specificity is an indication that it is possible to predict areas of large error with some fidelity. Absolute difference between the ground truth rendering and the renderings at different spp, averaged across all pixels in the image, is shown in Figure 6D. As shown, the average error decreases with increasing spp, which confirms spp as a viable parameter to control noise.

Additional aspects of the presently-disclosed methods will now be described, including anti-aliasing, regionalisation, temporal prediction and entropy coding. Some or all of these additional aspects may be used in conjunction with (or separately from) the above-described methods.

As mentioned above, the feature extractor 110 may use a single probing ray to gather scene features at the first ray intersection point. In scenes with a high level of detail, or low resolution renderings, there may be multiple 3D world assets present at a sub-pixel level. This may lead to aliasing effects. To mitigate such effects, multiple probing rays can be cast through a single pixel, such that different elements of the 3D scene can be hit at a sub-pixel resolution. The feature extractor 110 may be executed for each of the probing rays, returning a set of features $\{\theta^{(1)}, \theta^{(2)}, \theta^{(3)}, ... \}$. Each of the elements is sent through the BAP predictor 120, and the resultant raw BAPs may be averaged. This anti-aliasing operation may incur some additional computational cost, due to the additional probing rays cast and the additional evaluations of the BAP predictor 120, but this can be traded off against an improvement in resulting image quality.

Regionalization may be used to increase computational efficiency of the presently-described methods. A ray tracing-based BAP predictor 120 that uses an MLP or Transformer architecture may process pixels individually. Therefore, the complexity of the method increases as $O(hw)$. For instance, doubling the image dimensions leads to a 4-fold increase in complexity. For high resolutions, the number of pixels and hence the corresponding computational effort may be large. As an alternative, therefore, the image can be subdivided into regions corresponding to different assets or asset types. Then, the BAP predictor 120 and budget allocator 130 are only run once for each region. This reduces the complexity to $O(|A|)$ where $|A|$ is the number of regions. The complexities for the BAP predictor 120 and budget allocator 130 can thus be made independent of the screen resolution, allowing for efficient scaling to high resolutions such as 4K (3840 $\times$ 2160 px). Regionalization that trades off computation vs versatility can be implemented in different ways, including feature averaging and partitioned evaluation with fusion.

In the case of feature averaging, the feature extractor 110 is run on each pixel, and an asset identifier (ID) is included in the retrieved information. If the asset ID is not available or not provided by a game engine or 3D software, surrogate asset IDs can be generated by clustering approaches such as k-means clustering performed on the feature vectors. A single feature vector $\theta$ is then produced for each region by grouping all pixels corresponding to the same asset ID. To this end, for continuous features, the features are averaged, and for all discrete or categorical features, the majority category may be used. These single feature vectors are then forwarded to the BAP predictor 120 and budget allocator 130. The resultant BAPs for the region are then assigned to all pixels in the region. Regionalization also serves as a regularization approach. First, the averaging operation typically avoids extreme values for the features. Second, it assures that all pixels corresponding to a specific asset are rendered at the same quality, avoiding artifacts stemming from differential rendering in the same spatial area.

A disadvantage of simple feature averaging is that some features, e.g. the geometric normal, can vary significantly across patches of an object. A simple averaging operation may lead to a value that is not representative of the region. At the same time, many features across an object are typically constant (e.g. material properties). To reap the computational benefits of region-based prediction, while accounting for differences within regions, a partitioned approach can be used. In such an approach, features are partitioned into constant features (e.g. material properties of an asset) and variable features (e.g. surface normals). The constant features are processed only once for the region with a model $f_{const}$ (e.g. an MLP or Transformer). This reaps the computational benefit of a single evaluation. The variable features, on the other hand, are processed pixel-by-pixel with a model $f_{var}$ (e.g. another MLP or Transformer). Fusion is then performed, involving stacking the outputs of $f_{const}$ and $f_{var}$ together, and the stacked outputs can then be passed on to the BAP predictor 120.

Temporal prediction may be used to exploit temporal redundancies, e.g. if the rendered image is part of an animation sequence. First, algorithmically introducing temporal correlations in BAPs can reduce unwanted temporal artifacts such as flickering. Second, the predicted BAP for each pixel from the previous frame can inform the prediction of the current frame, thereby increasing efficiency and/or accuracy. For example, if one pixel was difficult to render in frame t, without a change in conditions it should also be difficult to render in frame $t + 1$. Since most scenes contain at least some kind of movement, for this to work it may be advantageous to correctly map the pixels from the previous frame to the current frame. This is made possible by accessing the 3D world-coordinates of the objects in the scene and the movement information between frames. When the image is rasterized or a probing ray is shot into the scene, information of the 3D world-coordinate of the object that is seen per pixel in both the ray tracing and rasterization cases is obtained. After the BAP is computed for this pixel, the result and any additional information can be stored for use in the next frames, for example in a Hashgrid. In the next frame, this information can then be retrieved (after compensating for movement) and can serve as additional input to the BAP predictor 120.

Entropy-awareness can be used to facilitate efficient transport of images, e.g. over the Internet. In some cases, image content is rendered in the cloud rather than on the client or user device, and transported via a communications network such as the Internet. Cloud streaming and cloud gaming require the transmission of large amounts of image data in real-time, necessitating efficient image compression to minimize latency and bandwidth usage. Therefore, instead of focusing solely on maximizing image quality, the presently-described methods can include entropy maximization to facilitate efficient transport alongside image quality. In this context, entropy maximization involves transforming the image data in a way that the resulting bitstream is more amenable to compression algorithms like Huffman coding or arithmetic coding. By intelligently balancing the trade-offs between image quality and entropy, a more efficient and robust method for image transmission via a network can be achieved.

Embodiments disclosed herein make optimal use of a computational budget for reaching a certain goal such as delivering the highest visual quality or best compressibility. As an example, spp may be optimized to achieve the best visual quality as operationalized by Mean-Squared Error (MSE). MSE is measured between a ground truth (e.g. obtained by rendering a scene with a very large number of spp) $I$ and a noisy rendering at low spp $\hat{I}$. For unbiased estimators MSE may be entirely determined by the estimator's variance, and hence minimizing variance is equivalent to minimizing error. The presently-described embodiments aim to minimize the compound error across all pixels in an image simultaneously. Reducing the error for the whole image is tantamount to reducing the sum of variances of the estimator across all pixels. The total rendering budget is represented by $N$, the total number of samples per pixel. It is aimed to optimize $n_k$, the spp for each pixel $k$ representing the pixel-wise budget, such that the error is minimized subject to the sum of $n_k$'s not exceeding $N$. This approach may be further extended to systems with time-varying compute resources such as consumer devices with fluctuating CPU or GPU resources due to ongoing other processes. To this end, the total number of available samples can be expressed as $N(t)$ for time point $t$. If more compute resources are available, $N(t)$ increases, and if fewer compute resources are available it decreases. To this end, the Monte Carto estimate of the integral in the rendering equation is adapted to make the estimate a function of the pixel $k$ and a target spp. This optimization problem cannot easily be solved immediately, because it requires knowledge of the variances $V[\hat{I}_k(n_k)]$ which are generally not available. Estimating the variances involves sampling a sufficient number of rays per pixel, but sampling multiple rays is inefficient and thus undesirable. Further, the solution space is discrete but it is of the order $O(N^P)$. In other words, it grows exponentially with the number of pixels, and is intractably large even for low resolutions such as 360p ($640 \times 360$ pixels). Therefore, the embodiments described herein provide a predictive method that is learnable and that leverages knowledge from existing data. This allows the error across all pixels in the image to be minimized simultaneously and in an efficient manner.

In embodiments, at least some of the methods described herein may be implemented by a system comprising a server and a user device (also referred to as a 'client device' or 'display device'). The server and the user device are operable to communicate with one another via one or more communications networks, e.g. a wireless local area network (WLAN), and one or more other networks, such as the Internet. Some parts of the presently-disclosed methods may be performed using the server, and other parts of the presently-disclosed methods may be performed using the user device. For example, during a deployment or inference stage, the server may determine budget allocation parameters for rendering pixels and transmit the budget allocation parameters via the communications network to the user device. The user device may then receive the budget allocation parameters and use the budget allocation parameters to render the pixels. Additionally or alternatively, some of the presently-disclosed methods may be performed entirely by the server and/or entirely by the user device. For example, at least some of the training methods disclosed herein may be performed entirely at a server.

The embodiments described herein are applicable to batch processing, i.e. processing a group of images or video frames together without delay constraints (e.g. an entire video sequence), as well as to stream processing, i.e. processing only a limited subset of a stream of images or video frames, or even a select subset of a single image, e.g. due to delay or buffering constraints.

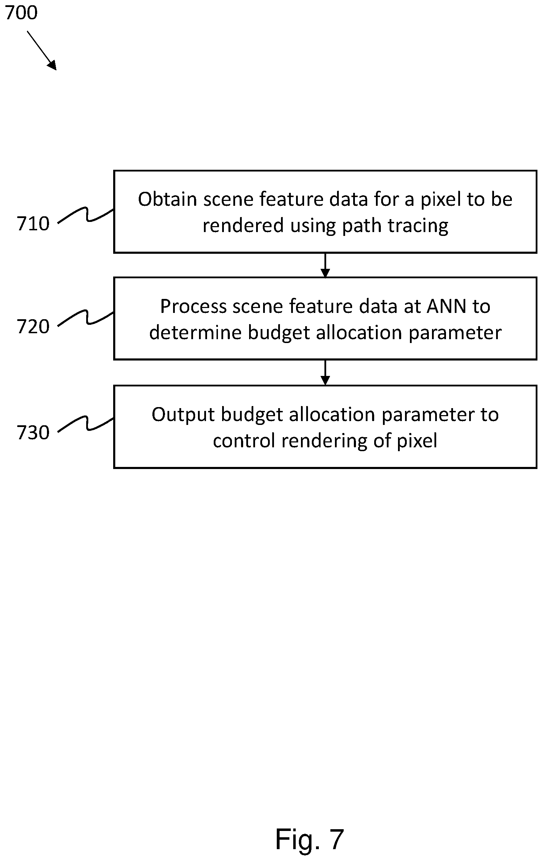

Figure 7 shows a method 700 for rendering an image of a three-dimensional scene using path tracing, according to embodiments. The method 700 may be performed at least in part by hardware and/or software. It will be understood that an actual rendering step is not required in the method 700, although a rendering step may be performed in some embodiments. In any case, the method 700 is suitable for use with, and/or as part of, a rendering process. The method 700 is performed for a pixel of the image to be rendered using path tracing.

At item 710, scene feature data for the pixel is obtained. The scene feature data indicates visual features of a location of the three-dimensional scene for depiction by the pixel in the image. Obtaining the scene feature data may comprise generating the scene feature data, e.g. by a feature extractor component such as the feature extractor 110 described above. Alternatively, obtaining the scene feature data may comprise receiving the scene feature data, e.g. from the feature extractor 110. In embodiments, the method 700 comprises receiving data indicative of the pixel in the image, e.g. indicating the location in the image of the pixel. The scene feature data may be obtained on the basis of such received data.

At item 720, the scene feature data is processed at an ANN to determine a budget allocation parameter for rendering the pixel using path tracing. The budget allocation parameter is indicative of an amount of computing resources to be used for rendering the pixel using path tracing. The ANN is trained to determine, from the scene feature data, the budget allocation parameter based on the visual features indicated by the scene feature data.

At item 730, the determined budget allocation parameter is output from the ANN to control a rendering of the pixel using path tracing.

In embodiments, the method 700 comprises rendering the pixel by performing path tracing using the determined budget allocation parameter.

In embodiments, the method 700 comprises generating the image of the three-dimensional scene using the rendered pixel.

In embodiments, the budget allocation parameter is indicative of a number of light paths to be traced for rendering the pixel using path tracing.

In embodiments, the budget allocation parameter is indicative of a maximum path length of light paths to be traced for rendering the pixel using path tracing.

In embodiments, the method 700 comprises: obtaining a system resource characteristic of a system configured to render the image using path tracing; and using the system resource characteristic and the determined budget allocation parameter to control the rendering, by the system, of the pixel using path tracing.

In embodiments, the system resource characteristic is time-varying.

In embodiments, the system resource characteristic is indicative of a total number of light paths to be traced for rendering the image.

In embodiments, the visual features comprise one or more of: geometric features indicating a geometry of one or more objects and/or surfaces in the scene; and material features indicating physical and/or optical properties of one or more objects and/or surfaces in the scene.

In embodiments, the scene feature data is indicative of a number, location and/or type of light sources in the scene.

In embodiments, the scene feature data for the pixel is derived using a ray tracing process. In some such embodiments, the visual features indicated in the scene feature data comprise visual features at a first intersection point of a light ray, cast through the pixel, with an object and/or surface in the scene.

In embodiments, the scene feature data for the pixel is derived using a geometry buffer, G-buffer, obtained using a rasterization process.

In embodiments, the ANN is trained using a quality score indicative of a visual quality of images rendered using budget allocation parameters determined by the ANN.

In embodiments, the ANN is trained based on a comparison between budget allocation parameters determined by the ANN for rendering pixels of a training image and predetermined budget allocation parameters for rendering the pixels of the training image.

In embodiments, the predetermined budget allocation parameters are derived using a greedy heuristic-based algorithm configured to: receive a plurality of renderings of a training image, each rendering generated using a different budget allocation parameter that is uniform across all pixels in the training image; and output an optimised budget allocation parameter for each pixel in the training image.

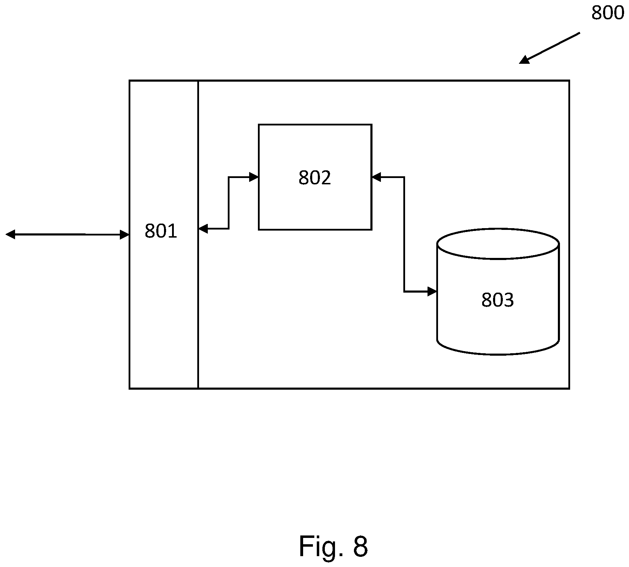

Embodiments of the disclosure include at least some of the methods described above performed on a computing device, such as the computing device 800 shown in Figure 8. The computing device 800 comprises a data interface 801, through which data can be sent or received, for example over a network. The computing device 800 further comprises a processor 802 in communication with the data interface 801, and memory 803 in communication with the processor 802. In this way, the computing device 800 can receive data, such as image data, video data, encoding statistics or various data structures, via the data interface 801, and the processor 802 can store the received data in the memory 803, and process it so as to perform the methods described herein, including processing and/or encoding data.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

**Claims**

1. A computer-implemented method for rendering an image of a three-dimensional scene using path tracing, the method comprising, for a pixel of the image to be rendered using path tracing:

    obtaining scene feature data for the pixel, the scene feature data indicating visual features of a location of the three-dimensional scene for depiction by the pixel in the image;
    processing, at an artificial neural network, ANN, the scene feature data to determine a budget allocation parameter for rendering the pixel using path tracing, the budget allocation parameter indicative of an amount of computing resources to be used for rendering the pixel using path tracing, wherein the ANN is trained to determine, from the scene feature data, the budget allocation parameter based on the visual features indicated by the scene feature data;

    and
    outputting, from the ANN, the determined budget allocation parameter to control a rendering of the pixel using path tracing.

2. A computer-implemented method according to claim 1, the method comprising rendering the pixel by performing path tracing using the determined budget allocation parameter.

3. A computer-implemented method according to claim 2, the method comprising generating the image of the three-dimensional scene using the rendered pixel.

4. A computer-implemented method according to any preceding claim, wherein the budget allocation parameter is indicative of a number of light paths to be traced for rendering the pixel using path tracing.

5. A computer-implemented method according to any preceding claim, wherein the budget allocation parameter is indicative of a maximum path length of light paths to be traced for rendering the pixel using path tracing.

6. A computer-implemented method according to any preceding claim, the method comprising:

    obtaining a system resource characteristic of a system configured to render the image using path tracing; and
    using the system resource characteristic and the determined budget allocation parameter to control the rendering, by the system, of the pixel using path tracing.

7. A computer-implemented method according to claim 5 or claim 6, wherein the system resource characteristic is indicative of a total number of light paths to be traced for rendering the image.

8. A computer-implemented method according to any preceding claim, wherein the visual features comprise one or more of: geometric features indicating a geometry of one or more objects and/or surfaces in the scene; and material features indicating physical and/or optical properties of one or more objects and/or surfaces in the scene.

9. A computer-implemented method according to any preceding claim, wherein the scene feature data is indicative of a number, location and/or type of light sources in the scene.

10. A computer-implemented method according to any preceding claim,

wherein the scene feature data for the pixel is derived using a ray tracing process, and wherein the visual features indicated in the scene feature data comprise visual features at a first intersection point of a light ray, cast through the pixel, with an object and/or surface in the scene.

11. A computer-implemented method according to any preceding claim, wherein the scene feature data for the pixel is derived using a geometry buffer, G-buffer, obtained using a rasterization process.

12. A computer-implemented method according to any preceding claim, wherein the ANN is trained using a quality score indicative of a visual quality of images rendered using budget allocation parameters determined by the ANN.

13. A computer-implemented method according to any preceding claim, wherein the ANN is trained based on a comparison between budget allocation parameters determined by the ANN for rendering pixels of a training image and predetermined budget allocation parameters for rendering the pixels of the training image.

14. A computing device comprising:

one or more processors; and memory, wherein the computing device is arranged to perform, using the one or more processors, a method according to any preceding claim.

15. A computer program product arranged, when executed on a computing device comprising one or more processors and memory, to cause the computing device to perform, using the one or more processors, a method according to any of claims 1 to 13.

Fig. 1

EP 4 742 166 A1

3D scene

Feature
Extractor

image pixel grid

probing
ray

$$\theta = \begin{bmatrix} \theta_{geo} \\ \theta_{mat} \\ \theta_{aux} \\ l \end{bmatrix}$$

Fig. 2

Fig. 3

Fig. 4

EP 4 742 166 A1

EP 4 742 166 A1

Fig. 5A

Fig. 5B

Fig. 6A

Fig. 6B

MAE(gt, image) for 4 spp

Fig. 6C

MAE(gt, image) averaged across pixels

Fig. 6D

700

710 — Obtain scene feature data for a pixel to be rendered using path tracing

720 — Process scene feature data at ANN to determine budget allocation parameter

730 — Output budget allocation parameter to control rendering of pixel

Fig. 7

Fig. 8

Europäisches
Patentamt

European
Patent Office

Office européen
des brevets

# EUROPEAN SEARCH REPORT

**Application Number**

EP 24 21 1499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDR KUZNETSOV ET AL: "Deep Adaptive Sampling for Low Sample Count Rendering", CHAPTER 1: MONTE CARLO PATH TRACING, WILEY-BLACKWELL, OXFORD, vol. 37, no. 4, 20 July 2018 (2018-07-20), pages 35-44, XP071489107, DOI: 10.1111/CGF.13473 | 1-4,6-8, 10,12-15 | INV. G06T15/06 |
| Y | * abstract * | 11 | |
| A | * 3.1 Sampling Map Estimator; figure 2 * ----- | 5,9 | |
| A | PER GANESTAM ET AL: "Auto-tuning interactive ray tracing using an analytical GPU architecture model", GENERAL PURPOSE PROCESSING WITH GRAPHICS PROCESSING UNITS, ACM, 2 PENN PLAZA, SUITE 701 NEW YORK NY 10121-0701 USA, 3 March 2012 (2012-03-03), pages 94-100, XP058041771, DOI: 10.1145/2159430.2159441 ISBN: 978-1-4503-1233-2 * abstract * ----- | 6,7 | |
| | | | **TECHNICAL FIELDS SEARCHED (IPC)** |
| | | | G06T |
| Y | OUYANG Y. ET AL: "ReSTIR GI: Path Resampling for Real-Time Path Tracing", CHAPTER 1: MONTE CARLO PATH TRACING, vol. 40, no. 8, 28 November 2021 (2021-11-28), pages 17-29, XP093106730, Oxford DOI: 10.1111/cgf.14378 * section 4.1. Sample Generation section 5. Implementation * ----- -/-- | 11 | |

The present search report has been drawn up for all claims

| Place of search | Date of completion of the search | Examiner |
|---|---|---|
| Berlin | 20 March 2025 | Reise, Frank |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

page 1 of 2

Europäisches
Patentamt

European
Patent Office

Office européen
des brevets

# EUROPEAN SEARCH REPORT

**Application Number**

EP 24 21 1499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STEVE BAKO ET AL: "Offline Deep Importance Sampling for Monte Carlo Path Tracing", CHAPTER 1: MONTE CARLO PATH TRACING, WILEY-BLACKWELL, OXFORD, vol. 38, no. 7, 14 November 2019 (2019-11-14), pages 527-542, XP071489841, DOI: 10.1111/CGF.13858 * abstract * * section 3.3 Algorithm overview; figure 3 * | 1,14,15 | |

-----

TECHNICAL FIELDS
SEARCHED    (IPC)

The present search report has been drawn up for all claims

| Place of search | Date of completion of the search | Examiner |
|---|---|---|
| Berlin | 20 March 2025 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)